# FASCICULE DE BREVET EUROPEEN

(11) **EP 4 494 278 B1**
(45) Date de publication et mention de la délivrance du brevet: **21.01.2026**
(21) Numéro de dépôt: 23709441.2
(22) Date de dépôt: 09.03.2023
(51) Int. Cl.: H04B 10/114, H04B 10/116, B60N 2/02, B60N 2/22

(54) **SIÈGE ÉQUIPÉ D'UN MODULE DE COMMUNICATION DE DONNÉES SELON LA TECHNOLOGIE LI-FI**
SITZ MIT EINEM DATENKOMMUNIKATIONSMODUL NACH LI-FI-TECHNOLOGIE
SEAT PROVIDED WITH A DATA COMMUNICATION MODULE ACCORDING TO THE LI-FI TECHNOLOGY

(30) Priorité: 17.03.2022 FR 2202351
(43) Date de publication de la demande: 22.01.2025
(73) Titulaire: Latelec, 31500 Toulouse (FR)
(72) Inventeur: BACOU, Alexandre, 82700 SAINT PORQUIER (FR)
(74) Mandataire: Santarelli
(86) Numéro de dépôt international: PCT/EP2023/056064
(87) Numéro de publication internationale: WO 2023/174798

(56) Documents cités:
- FR-A1- 3 097 174
- FR-A1- 3 097 178
- JP-A- 2005 322 965
- JP-A- 2011 254 285
- US-B1- 10 693 557

## Description

### Domaine technique de l'invention

L'invention concerne un siège équipé d'un module de communication de données selon la technologie Li-Fi.

L'invention est notamment destinée à une application dans le domaine aéronautique, pour des sièges à dossier inclina ble d'aéronef, notamment les sièges situés dans la classe économique.

### Technique antérieure

Il existe un besoin croissant exprimé par les passagers d'avion d'avoir la possibilité d'accéder au réseau de communication de l'avion avec leurs propres équipements électroniques portatifs (ordinateur, téléphone, tablette...). Ce besoin est surtout exprimé par les passagers des avions de type court-courrier car ceux-ci ne sont pas munis de systèmes de divertissement à bord (dits systèmes IFE, acronyme de In Flight Entertainment).

Pour répondre à ce besoin, on assiste aujourd'hui à un déploiement progressif de diverses technologies de communication sans fil dans les avions.

Certaines cabines d'avion sont déjà équipées de la technologie Wi-Fi (acronyme de Wireless Fidelity) pour offrir une connexion internet aux équipements électroniques portatifs des passagers. Or le Wi-Fi présente de nombreux inconvénients. Entre autres, l'utilisation du Wi-Fi peut causer des interférences avec d'autres appareils présents dans l'avion, ou encore peut soulever des questions de santé publique concernant les risques liés à une exposition prolongée à des rayonnements électromagnétiques.

Une autre technologie émergente est la technologie Li-Fi (acronyme anglais de Light Fidelity). La technologie Li-Fi est une technologie de communication sans fil basée sur l'utilisation de la lumière dans le domaine visible (longueur d'onde comprise entre 400nm et 780nm) ou le domaine infrarouge (longueur d'onde comprise entre 780nm et 2µm) comme vecteur d'informations. Le principe du Li-Fi repose sur le codage et l'envoi de données via une modulation d'amplitude, de fréquence ou de phase d'une source lumineuse, selon un protocole standardisé. La technologie Li-Fi permet avantageusement de s'affranchir des contraintes liées à la sécurité des données, la pollution électromagnétique rencontrée avec le Wi-Fi et ses problèmes en termes de santé.

Concrètement, dans une cabine d'avion, pour un siège, un premier dispositif de communication de données selon la technologie Li-Fi est logé dans un plafond de la cabine et comporte une source lumineuse et un photorécepteur. Un second dispositif de communication de données selon la technologie Li-Fi est logé dans le siège, généralement le dossier, et comporte également une source lumineuse et un photorécepteur. Le second dispositif de communication de données selon la technologie Li-Fi est disposé dans le cône d'émission de la source lumineuse du premier dispositif, permettant l'établissement d'une communication entre le premier dispositif de données selon la technologie Li-Fi et le second dispositif de données selon la technologie Li-Fi. Respectivement, le premier dispositif de communication de données selon la technologie Li-Fi est disposé dans le cône d'émission de la source lumineuse du second dispositif, permettant l'établissement d'une communication entre le second dispositif de données selon la technologie Li-Fi et le premier dispositif de données selon la technologie Li-Fi. Un tel système est divulgué dans le document FR3097178A1.

Bien que la distance entre le siège et le plafond de la cabine ne soit pas importante, comprise généralement entre 500mm et 1500mm, l'angle de divergence du cône d'émission de la source lumineuse du second dispositif de données selon la technologie Li-Fi est défini de sorte que le spot couvre le premier dispositif de communication de données selon la technologie Li-Fi.

Or en classe économique, les dossiers des sièges peuvent s'incliner, avec un angle d'inclinaison pouvant atteindre parfois jusqu'à 30°. Pour garantir la transmission des données entre le siège et le plafond, cette forte inclinaison du siège impose le choix, pour la source lumineuse du second dispositif de données selon la technologie Li-Fi, d'une source lumineuse avec un angle de divergence du cône d'émission très important, de l'ordre de 60°, et un spot de diamètre supérieur ou égal à 1500mm en fonction de la distance entre le siège et le plafond. Une telle contrainte ne permet pas de garantir le débit car la puissance optique reçue par le photorécepteur du premier dispositif de communication de données selon la technologie Li-Fi est trop faible. De plus, l'utilisation d'une source lumineuse avec d'une part un angle de divergence du cône d'émission suffisant pour couvrir le premier dispositif de communication de données quelle que soit l'inclinaison du dossier et d'autre part avec une puissance optique suffisante reçue par le photorécepteur du premier dispositif de communication de données selon la technologie Li-Fi pour garantir le débit nécessaire à la transmission de données est consommatrice en puissance électrique, ce qui peut conduire à un échauffement thermique de la source lumineuse et en conséquence réduire la durée de vie de la source lumineuse.

### Présentation de l'invention

La présente invention vise à remédier aux inconvénients précités.

Notamment, la présente invention permet de garantir une communication de données depuis un siège, quelle que soit l'inclinaison du dossier dudit siège.

A cet effet, il est proposé par la présente invention un siège comportant un dossier réglable en inclinaison, avec un angle d'inclinaison compris dans une plage d'inclinaison prédéfinie, ledit siège comportant un module de communication de données selon la technologie Li-Fi, dit module Li-Fi, positionné au niveau d'une partie supérieure du dossier, ledit module Li-Fi étant destiné à communiquer avec un dispositif de communication de données selon la technologie Li-Fi associé, dit dispositif Li-Fi. Le dispositif Li-Fi est disposé hors du siège. Le module Li-Fi comporte :
- Au moins deux sources lumineuses, chaque source lumineuse étant configurée pour émettre un faisceau d'émission,
- Au moins un photorécepteur.

Les sources lumineuses peuvent être préférentiellement des diodes électroluminescentes ou des diodes laser. Le au moins un photorécepteur peut être préférentiellement une photodiode.

Les au moins deux sources lumineuses sont alignées, disposées parallèlement à un plan longitudinal médian du siège. Chaque source lumineuse du module Li-Fi est agencée sur le dossier du siège de sorte à être respectivement associée à une sous-plage de la plage d'inclinaison du dossier du siège. Le module Li-Fi (100) est configuré de sorte que, selon l'angle d'inclinaison du dossier, au moins la source lumineuse (110) associée à la sous-plage dans laquelle se trouve l'angle d'inclinaison du dossier (222) est active. Le module Li-Fi est positionné sur le dossier du siège de sorte que, selon l'angle d'inclinaison du dossier, la source lumineuse associée à la sous-plage dans laquelle se trouve l'angle d'inclinaison du dossier est configurée pour diriger son faisceau d'émission sur le dispositif Li-Fi associé.

Un siège équipé d'un tel module Li-Fi permet avantageusement, quel que soit l'angle d'inclinaison du dossier du siège, de garantir la transmission des données entre le siège et le dispositif Li-Fi, et donc de garantir le débit, même lorsque le dossier du siège est incliné.

L'invention permet d'optimiser l'angle de divergence maximal du faisceau lumineux des sources lumineuses du module Li-Fi, car il n'est plus nécessaire de recourir à des sources lumineuses présentant un faisceau lumineux avec un angle de divergence suffisant pour couvrir le dispositif Li-Fi, quelle que soit l'inclinaison du dossier.

Dans des modes particuliers de réalisation, l'invention répond en outre aux caractéristiques suivantes, mises en œuvre séparément ou en chacune de leurs combinaisons techniquement opérantes.

Dans des formes particulières de réalisation de l'invention, le module Li-Fi est configuré pour que toutes les sources lumineuses soient actives en même temps. Dans des modes particuliers de réalisation de l'invention, le module Li-Fi comporte :
- Un dispositif de détection de la position du dossier du siège configuré pour déterminer l'angle d'inclinaison du dossier du siège,
- Une unité de commande configurée pour piloter les au moins deux sources lumineuses en fonction de l'angle d'inclinaison du dossier du siège.

Dans des formes particulières de réalisation de l'invention, l'unité de commande étant configurée pour que, selon l'angle d'inclinaison du dossier, seule la source lumineuse associée à la sous-plage d'inclinaison du dossier du siège dans laquelle se trouve l'angle d'inclinaison du dossier est activée. Les autres sources lumineuses sont inactives ou désactivées. Ainsi on limite la consommation électrique des sources lumineuses en activant uniquement que la source lumineuse qui dirige son faisceau d'émission sur le dispositif Li-Fi associé.

Dans des exemples particuliers de réalisation de l'invention, le dispositif de détection de la position du dossier du siège est un inclinomètre ou un capteur de distance par temps de vol.

Dans des modes particuliers de réalisation de l'invention, les au moins deux sources lumineuses sont soudées chacune respectivement sur un circuit imprimé rigide, les circuits imprimés rigides étant reliés entre eux par un circuit imprimé flexible. De par l'utilisation des circuits imprimés flexibles, il est possible d'adapter le positionnement des au moins deux sources lumineuses et du au moins un photorécepteur à la forme de la partie supérieure du dossier.

Dans des modes particuliers de réalisation de l'invention, le module Li-Fi comporte un boîtier pour la protection des au moins deux sources lumineuses, du au moins un photorécepteur, et le cas échéant le dispositif de détection de la position du dossier du siège. Un tel boîtier permet avantageusement de protéger les au moins deux sources lumineuses, le au moins un photorécepteur et le cas échéant le dispositif de détection de la position du dossier du siège, mais également de protéger leur positionnement pour maintenir leurs orientations.

Dans des exemples particuliers de réalisation de l'invention, le boîtier est préférentiellement disposé sous une housse de protection recouvrant au moins la partie supérieure du dossier du siège.

L'invention est également relative à un ensemble comportant un siège, conforme à au moins l'un de ses modes de réalisation, et un dispositif Li-Fi, extérieur audit siège, le module Li-Fi étant destiné à communiquer avec le dispositif Li-Fi et étant positionné dans un cône d'émission dudit dispositif Li-Fi.

L'invention est également relative à une cabine d'avion comportant une pluralité de sièges, conformes à au moins l'un de ses modes de réalisation, et une pluralité de dispositifs Li-Fi, chaque module Li-Fi communicant avec un dispositif Li-Fi, chaque dispositif Li-Fi comportant une source lumineuse et un photorécepteur.

Dans des modes particuliers de réalisation de l'invention, les dispositifs Li-Fi sont disposés dans un plafond de la cabine, au niveau des coffres à bagages.

### Brève description des figures

L'invention sera mieux comprise à la lecture de la description suivante, donnée à titre d'exemple nullement limitatif, et faite en se référant aux figures suivantes :
[Fig. 1] illustre un exemple d'un système de communication de données selon la technologie Li-Fi embarqué dans un avion ;
[Fig. 2] représente un agrandissement d'un appui-tête d'un dossier de siège d'avion comportant un exemple de module de communication de données selon la technologie Li-Fi selon l'invention faisant partie du système de communication de données selon la technologie Li-Fi ;
[Fig. 3] représente une vue de dessus d'un exemple de module de communication de données selon la technologie Li-Fi selon l'invention.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

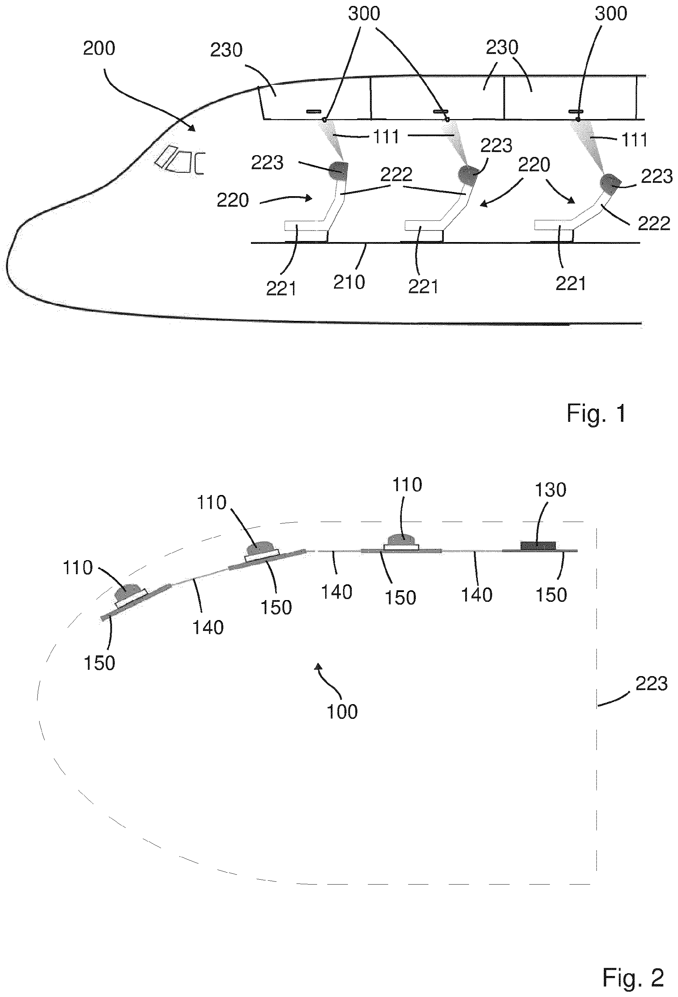

La figure 1 illustre de manière schématique une cabine 200 d'avion dans laquelle l'invention peut être déployée. La cabine 200 comporte, de manière classique, une pluralité de sièges 220, notamment pour recevoir des passagers.

Chaque siège 220 repose sur un plancher 210. Chaque siège 220 comporte de manière classique une assise 221 et un dossier 222. Le dossier 222 présente, au niveau d'une partie supérieure, un appui-tête 223. Le dossier 222 est préférentiellement lié à l'assise 221, par exemple par une articulation permettant d'ajuster son inclinaison par rapport à l'assise 221. Le dossier 222 est préférentiellement réglable en inclinaison sur une plage d'inclinaison donnée. Le dossier 222 est préférentiellement inclinable vers l'arrière par rapport à l'assise 221, comme ceux disposés par exemple dans les classes économiques.

Chaque siège 220 présente un plan longitudinal médian.

Dans l'exemple illustré sur la figure 1, seuls trois sièges sont représentés. Le dossier 222 du siège 220 représenté le plus à gauche sur la figure 1 présente une inclinaison nulle par rapport à l'assise 221. Le dossier 222 du siège central sur la figure 1 présente une première inclinaison par rapport à l'assise 221 du siège 220. Le dossier 222 du siège 220 représenté le plus à droite sur la figure 1 présente une deuxième inclinaison par rapport à l'assise 221 du siège, supérieure à la première inclinaison.

La cabine 200 d'avion comporte un système de communication de données selon la technologie Li-Fi, dit système de communication Li-Fi, adapté à faire communiquer des données provenant d'un réseau de l'avion avec des équipements (non représentés sur les figures) soit embarqués par les passagers, tels que par exemple une tablette, un téléphone ou encore un ordinateur portable, soit présents à bord de l'avion, tel que des écrans intégrés dans les sièges de l'avion.

Le système de communication Li-Fi permet avantageusement à chaque passager d'avoir un accès sécurisé à des données de divertissement ou à de données internet, quel que soit l'équipement utilisé. Le système de communication Li-Fi permet de recevoir et/ou d'envoyer des données internes et/ou externe à l'avion de façon sécurisée et personnalisée dans un emplacement physique prédéterminé.

Dans un exemple particulier de réalisation, l'emplacement peut correspondre à un espace délimité à un siège, pour un passager. Ainsi, chaque passager, lorsqu'il est assis sur son siège, bénéficie d'un espace de connexion unique et personnel pour recevoir et transmettre des données de manière confidentielle.

Le système de communication Li-Fi comporte :
- Une pluralité de modules de communication de données selon la technologie Li-Fi, dits modules Li-Fi 100,
- Une pluralité de dispositifs de communication de données selon la technologie Li-Fi, dits dispositifs Li-Fi 300.

Un module Li-Fi 100 est destiné à équiper un siège, de préférence le dossier 222 d'un siège 220. Chaque module Li-Fi 100 est préférentiellement disposé au niveau de la partie supérieure du dossier 222 du siège 220 associé, par exemple au niveau de l'appui-tête 223 du dossier 222.

Chaque siège 220 de la cabine 200 est ainsi préférentiellement équipé d'un module Li-Fi 100.

Chaque module Li-Fi 100 est destiné à être connecté à un équipement.

De préférence, chaque module Li-Fi 100 est intégré dans le siège 200 et est uniquement connecté à un équipement (écran) intégré dans le siège et/ou à un connecteur USB (acronyme anglais pour Universal Serial Bus), afin que le passager puisse, à l'aide d'un cordon de charge, brancher son équipement (téléphone, sa tablette ou son ordinateur portable). Il est évident que tout autre type de connecteur peut être utilisé, par exemple un connecteur USB type C, un connecteur RJ 45. Le module Li-Fi 100 forme préférentiellement une partie de l'équipement qui est intégré dans le siège.

Chaque module Li-Fi 100 est destiné à communiquer avec un dispositif Li-Fi 300.

Chaque module Li-Fi 100 est avantageusement positionné sous un cône d'émission du dispositif Li-Fi 300 de sorte qu'une communication peut s'établir entre le dispositif Li-Fi 300 et le module Li-Fi 100. L'équipement, lorsqu'il est connecté au module Li-Fi 100, est ainsi connecté au réseau de l'avion via le module Li-Fi 100 et le dispositif Li-Fi 300.

Les dispositifs Li-Fi 300 sont quant à eux préférentiellement logés au niveau d'un plafond de la cabine 200.

Dans une forme préférée de réalisation, les dispositifs Li-Fi 300 sont logés au niveau des coffres à bagages 230, par exemple un dispositif Li-Fi 300 au-dessus de chaque siège 220.

### Module Li-Fi 100

La description ci-après décrit de manière détaillée un module Li-Fi 100. Cette description s'applique par extension pour tous les modules Li-Fi 100 de la cabine 200.

Un module Li-Fi 100 comporte :
- Au moins deux sources lumineuses 110, de préférence, une pluralité de sources lumineuses 110,
- Au moins un photorécepteur 120.

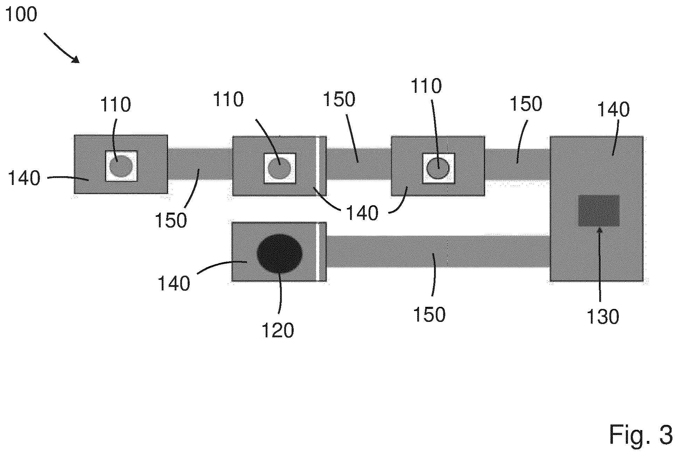

Dans l'exemple non limitatif des figures 2 et 3, le module Li-Fi 100 comporte trois sources lumineuses 110.

Chaque source lumineuse 110 est avantageusement adaptée pour émettre dans le domaine infrarouge.

Dans un exemple préféré de réalisation, chaque source lumineuse 110 est une diode électroluminescente (également connue sous l'acronyme DEL) ou une diode laser.

Chaque source lumineuse 110 est configurée pour émettre un faisceau lumineux, préférentiellement sous la forme d'un cône d'émission 111, avec un angle de divergence maximal prédéterminé. Dans l'exemple de la figure 1, les faisceaux lumineux représentés, sous la forme d'un cône d'émission 111, proviennent d'une des sources lumineuses 110 du module Li-Fi 100 de chaque siège 220.

Les au moins deux sources lumineuses 110 du module Li-Fi 100 sont disposées à distance les unes des autres, de manière alignée, comme illustré sur la figure 2.

Lorsque le module Li-Fi 100 est positionné sur le dossier 222 du siège 220, les au moins deux sources lumineuses 110 sont alignées, de préférence disposées parallèlement au plan longitudinal médian du siège 220.

Chaque source lumineuse 110 du module Li-Fi 100 est agencée sur le dossier 222 du siège 220 de sorte à être respectivement associée à une sous-plage de la plage d'inclinaison du dossier 222 du siège 220. En d'autres termes, la plage d'inclinaison est divisée en au moins deux sous-plages d'inclinaison, de préférence ne se chevauchant pas. Il y a autant de sources lumineuses 110 que de sous-plages.

Le module Li-Fi 100 est positionné sur le dossier 222 du siège 220 de sorte que, selon la sous-plage d'inclinaison du dossier 222 du siège 220 dans laquelle se trouve l'angle d'inclinaison du dossier 222, le faisceau d'émission de la source lumineuse 110 associée à cette sous-plage est configuré pour être dirigé sur le dispositif Li-Fi 300 associé.

En d'autres termes, chaque source lumineuse 110 du module Li-Fi 100 est positionnée sur le dossier 222 du siège 220, de sorte que, selon la sous-plage d'inclinaison du dossier 222 du siège 220 dans laquelle se trouve l'angle d'inclinaison du dossier 222, le dispositif Li-Fi 300 est dans le cône d'émission 111 de la source lumineuse 110 associée à cette sous-plage.

Par angle d'inclinaison, on entend l'angle d'inclinaison du dossier 222 par rapport à l'assise 221 du siège 220. Le dossier 222 présente un angle d'inclinaison nul lorsque le dossier 222 est perpendiculaire à l'assise 221.

Dans un exemple non limitatif de réalisation, tel qu'illustré sur les figures 1 à 3, le module comporte trois sources lumineuses 110, chaque source lumineuse 110 correspondant à une sous-plage d'inclinaison du dossier 222. La plage d'inclinaison du dossier 222 du siège 220 est ainsi décomposée en trois sous-plages.

Par exemple, lorsque la plage d'inclinaison du dossier 222 est comprise entre [0°-30°] et que le module comporte trois sources lumineuses 110, la plage d'inclinaison du dossier 222 du siège 220 est décomposée en trois sous-plages : [0-10[, [10-20[, [20-30].

Il est possible d'augmenter le nombre de sources lumineuses 110, et donc le nombre de sous-plages associées.

Le au moins un photorécepteur 120 du module Li-Fi 100 est positionné sur le siège 220 de sorte que, quel que soit l'angle d'inclinaison du dossier 222 du siège, dans la plage d'inclinaison dudit dossier 222, le au moins un photorécepteur 120 est toujours dans le cône d'émission du dispositif Li-Fi 300.

Dans un exemple de réalisation, le au moins un photorécepteur 120 est une photodiode.

Dans un mode de réalisation, le au moins un photorécepteur 120 peut être positionné sur le siège 220 dans la continuité du positionnement des sources lumineuses 110, ou entre deux sources lumineuses 110.

Dans un mode préféré de réalisation, le au moins un photorécepteur 120 du module Li-Fi 100 est positionné sur le siège, parallèlement aux sources lumineuses 110.

Dans un exemple de réalisation, comme illustré sur la figure 3, le module Li-Fi 100 comporte un seul photorécepteur 120. Lorsque le module Li-Fi 100 comporte trois sources lumineuses 110, comme illustré figure 3, le photorécepteur 120 est de préférence disposé au niveau de la source lumineuse 110 centrale.

Dans un autre exemple de réalisation, le module Li-Fi 100 peut comporter autant de photorécepteurs 120 que de sources lumineuses 110. Dans cet exemple, lorsque le module Li-Fi 100 est positionné sur le dossier 222 du siège, les photorécepteurs 120 sont alignés, de préférence disposés parallèlement aux sources lumineuses 110 et parallèlement au plan longitudinal médian du siège 220.

Le module Li-Fi 100 comporte une unité de commande configurée pour notamment piloter chaque source lumineuse 110 du module Li-Fi 100.

Dans une première configuration d'utilisation du module Li-Fi 100, toutes les sources lumineuses 110 du module Li-Fi 100 sont actives en même temps.

Dans une seconde configuration d'utilisation du module Li-Fi 100, seule une source lumineuse 110 du module Li-Fi 100 n'est active à la fois. L'unité de commande est avantageusement configurée pour piloter les sources lumineuses 110 en fonction de l'angle d'inclinaison du dossier 222 du siège 220. L'unité de commande est configurée de sorte que, selon l'angle d'inclinaison du dossier 222, seule la source lumineuse 110 associée à la sous-plage d'inclinaison du dossier 222 du siège 220 dans laquelle se trouve l'angle d'inclinaison du dossier 222 est activée. Les autres sources lumineuses 110 du module Li-Fi 100 sont inactives et/ou désactivées.

Dans cette seconde configuration, pour déterminer l'angle d'inclinaison du dossier 222 du siège, le module Li-Fi 100 comporte un dispositif 130 de détection de la position du dossier 222 du siège 220.

Dans un exemple de réalisation, le dispositif 130 de détection de la position du dossier 222 du siège 220 comporte un capteur de position, tel qu'un inclinomètre, disposé sur le dossier 222 du siège 220.

Dans un autre exemple de réalisation, le dispositif 130 de détection de la position du dossier 222 du siège 220 comporte un capteur de position disposé sur le dossier 222 du siège 220 et un capteur de position disposé sur l'assise 221 du siège 220 ou au niveau du plancher 210. Les deux capteurs de position sont par exemple des inclinomètres. Dans cet exemple de réalisation, l'unité de commande comporte préférentiellement un calculateur configuré pour déterminer, par différence, l'angle d'inclinaison du dossier 222 par rapport à l'assise 221. Dans un tel exemple de réalisation, le capteur de position disposé sur l'assise 221 du siège 220 ou au niveau du plancher 210 sert de référence pour garantir qu'il s'agit bien de l'inclinaison du dossier 222 et non de l'inclinaison de l'avion.

Dans un autre exemple de réalisation, le dispositif 130 de détection de la position du dossier 222 du siège 220 comporte un capteur de distance disposé sur le dossier 222 du siège 220 configuré pour mesurer la distance entre le dossier 222 et un point de référence au plafond de la cabine 200. Dans cet exemple de réalisation, l'unité de commande du module Li-Fi 100 comporte préférentiellement un calculateur configuré pour déduire l'angle d'inclinaison du dossier 222 par rapport à l'assise 221 à partir de la mesure de distance du capteur de distance. Dans une forme de réalisation, le capteur de distance est un capteur de distance par temps de vol « TOF » (acronyme anglais pour Time Of Flight).

Les composants électroniques du module Li-Fi 100, c'est-à-dire les au moins deux sources lumineuses 110, le au moins un photorécepteur 120, l'unité de commande, et le cas échéant tout ou partie du dispositif 130 de détection de la position du dossier 222 du siège, sont préférentiellement soudés sur un circuit imprimé (ou PCB de l'anglais « Printed Circuit Board ») rigide 140. Les composants constituant l'unité de commande sont également préférentiellement soudés sur le circuit imprimé rigide 140.

Dans une forme non limitative de réalisation, chaque source lumineuse 110, le au moins un photorécepteur 120, l'unité de commande, et le cas échéant et tout ou partie du dispositif 130 de détection de la position du dossier 222 du siège, sont respectivement soudés chacun sur un circuit imprimé rigide 140. Deux circuits imprimés rigides 140 sont reliés entre eux par un circuit imprimé flexible 150. Ainsi, une meilleure dissipation thermique de chaque composant est obtenue. De plus, de par la flexibilité des circuit imprimé flexibles 150, il est possible de s'adapter à la courbure de l'appui-tête 223.

Dans un exemple de réalisation, comme illustré sur la figure 3, les circuits imprimés rigides de chaque source lumineuse 110 sont reliés entre eux par un circuit imprimé flexible 150 et forment une ligne et sont reliés au circuit électronique comportant les composants constituant l'unité de commande, et le cas échéant tout ou partie du dispositif 130 de détection de la position du dossier 222 du siège 220. Le circuit imprimé rigide 140 du photorécepteur 120 est relié également au circuit électronique comportant les composants constituant l'unité de commande, et le cas échéant tout ou partie du dispositif 130 de détection de la position du dossier 222 du siège 220.

Dans une forme particulière de réalisation, pour protéger les composants électroniques du module Li-Fi 100, ledit module Li-Fi peut comporter un boîtier (non représenté sur les figures) dans lequel sont intégrés les sources lumineuses 110, le au moins un photorécepteur 120, l'unité de commande et, le cas échéant le dispositif 130 de détection de la position du dossier 222 du siège 220.

De préférence, le boîtier est réalisé dans un matériau permettant la transmission des longueurs d'ondes infrarouges.

Le boîtier est préférentiellement disposé sous la housse de protection recouvrant le dossier 222 du siège 220 et l'appui-tête 223.

Le boîtier est préférentiellement disposé sur un côté de l'appui-tête 223 du dossier 222, de sorte que la tête du passager assis sur le siège 220 ne vienne pas perturber la transmission des faisceaux lumineux des sources lumineuses 110.

Comme décrit précédemment, un module Li-Fi 100 est configuré pour communiquer avec un dispositif Li-Fi 300.

On nommera par ensemble, un siège 220, avec son module Li-Fi 100, et un dispositif Li-Fi 300, extérieur audit siège. Le module Li-Fi 100 est positionné dans le cône d'émission dudit dispositif Li-Fi.

Un dispositif Li-Fi 300 comporte de préférence une source lumineuse et un photorécepteur (non illustrés sur les figures). Le cône d'émission du dispositif Li-Fi 300 précédemment cité dans la description correspond au cône d'émission de la source lumineuse du dispositif Li-Fi 300.

Une unité de transmission/réception de données est configurée pour gérer la source lumineuse et le photorécepteur du dispositif Li-Fi 300.

Dans une forme de réalisation, chaque dispositif Li-Fi 300 comporte une unité de transmission/réception de données.

Dans une alternative, une seule unité de transmission/réception de données peut gérer la source lumineuse et le photorécepteur de tous les dispositifs Li-Fi 300 de la cabine 200.

Dans un exemple préféré de réalisation, la source lumineuse d'un dispositif Li-Fi 300 est une diode électroluminescente ou une diode laser.

Dans un exemple préféré de réalisation, le photorécepteur d'un dispositif Li-Fi 300 est une photodiode.

Dans un mode de réalisation, la source lumineuse et le photorécepteur d'un dispositif Li-Fi 300 sont disposés au niveau du plafond de la cabine 200, par exemple au niveau des coffres à bagages 230, de préférence à proximité des spots d'éclairage.

Dans une variante de réalisation, la source lumineuse et le photorécepteur d'un dispositif Li-Fi 300 sont déportés dans une autre partie de l'avion et une fibre optique achemine les signaux optiques vers une interface optique disposée au niveau d'un plafond de la cabine 200, par exemple au niveau des coffres à bagages 230, de préférence à proximité des spots d'éclairage.

En fonctionnement, le système de communication Li-Fi permet d'établir une communication bidirectionnelle de données entre le réseau de l'avion et un équipement situé dans un espace privilégié lié à un siège 220.

L'unité de transmission/réception de données est configurée pour convertir un signal numérique, porteur des informations de données à transmettre, en un signal optique modulé. Le signal optique modulé est de type Li-Fi.

Dans le sens de communication descendant, c'est-à-dire dans le sens d'une transmission de données depuis le réseau de l'avion vers un équipement dans un espace privilégié lié à un siège, la source lumineuse d'un dispositif Li-Fi 300 reçoit une instruction provenant de l'unité transmission/réception de données et est commandée pour l'émission d'un signal optique modulé, dit premier signal optique modulé.

Dans un exemple non limitatif de réalisation, cette modulation du signal optique est obtenue en commandant l'intensité de la source lumineuse dudit dispositif Li-Fi 300 de façon variable à très haute fréquence.

Le premier signal optique modulé est confiné dans un cône d'émission restreint dudit dispositif Li-Fi 300 définissant le volume de l'espace privilégié lié au siège 220. Au moins un photorécepteur 120 du module Li-Fi 100 du siège 220 est configuré pour détecter le premier signal optique modulé émis par la source lumineuse du dispositif Li-Fi 300. Le au moins un photorécepteur 120 du module Li-Fi 100 va convertir le premier signal optique modulé en un signal numérique. Ce signal numérique est ensuite traité par l'unité de commande du module Li-Fi 100, traduit en une information exploitable par l'équipement et transmis audit équipement.

### Cas où l'unité de commande active uniquement une des sources lumineuses selon l'inclinaison du siège

Dans le sens de communication montant, c'est-à-dire dans le sens d'une transmission de données issues d'un équipement vers le réseau de l'avion, ledit équipement transmet des données à l'unité de commande du module Li-Fi 100 associé au siège 220. Selon l'inclinaison du siège, seule la source lumineuse 110 du module Li-Fi 100 associée à la sous-plage d'inclinaison du dossier 222 du siège 220 dans laquelle se trouve l'angle d'inclinaison du dossier 222 reçoit une instruction provenant de l'unité de commande et est commandée pour l'émission d'un signal optique modulé, dit second signal optique modulé. Le second signal optique modulé est confiné dans le cône d'émission 111 restreint de ladite source lumineuse du module Li-Fi 100. Le photorécepteur du dispositif Li-Fi 300, ou l'interface optique, selon la variante de réalisation du dispositif Li-Fi 300, est situé dans le cône d'émission 111 de la source lumineuse 110 du module Li-Fi 100.

Le photorécepteur du dispositif Li-Fi 300 est configuré pour détecter le second signal optique modulé émis par ladite source lumineuse 110 du module Li-Fi 100. Le photorécepteur du dispositif Li-Fi 300 va convertir le second signal optique modulé en un signal numérique. Ce signal numérique est ensuite traité par l'unité de transmission/réception de données du dispositif Li-Fi 300, traduit en une information exploitable par le réseau de l'avion et transmis au réseau de l'avion.

Ainsi, grâce à un tel module Li-Fi 100, quel que soit l'angle d'inclinaison du dossier 222 du siège, il est possible de conserver les performances optimales du système de communication Li-Fi, en garantissant le débit, même lorsque les sièges ont un dossier 222 inclinable.

L'invention permet de recourir à un module Li-Fi 100 comportant des sources lumineuses 110 dont l'angle de divergence maximal du faisceau lumineux (angle de divergence maximal du cône d'émission) peut être optimisé, et donc restreint.

Ainsi, la consommation électrique des sources lumineuses 110 du module Li-Fi 100, et en conséquence leur échauffement thermique, est limitée.

De plus, grâce à l'utilisation de circuits électroniques flexibles et de circuits électroniques rigides pour la réalisation d'un module Li-Fi 100, le positionnement de celui-ci au niveau de l'appui-tête 223 du dossier 222 du siège 220 est facilité.

## Revendications

1. Siège (220) comportant un dossier (222) réglable en inclinaison, avec un angle d'inclinaison compris dans une plage d'inclinaison prédéfinie, ledit siège comportant un module de communication de données selon la technologie Li-Fi, dit module Li-Fi (100), positionné au niveau d'une partie supérieure du dossier (222), ledit module Li-Fi étant destiné à communiquer avec un dispositif de communication de données selon la technologie Li-Fi associé, dit dispositif Li-Fi (300), **caractérisé en ce que** le module Li-Fi (100) comporte :
- Au moins deux sources lumineuses (110), chaque source lumineuse (110) étant configurée pour émettre un faisceau d'émission,
- Au moins un photorécepteur (120),
Les au moins deux sources lumineuses (110) étant alignées, disposées parallèlement à un plan longitudinal médian du siège,
Chaque source lumineuse (110) du module Li-Fi (100) étant agencée sur le dossier (222) du siège (220) de sorte à être respectivement associée à une sous-plage de la plage d'inclinaison du dossier (222) dudit siège,
Le module Li-Fi (100) est configuré de sorte que, selon l'angle d'inclinaison du dossier, au moins la source lumineuse (110) associée à la sous-plage dans laquelle se trouve l'angle d'inclinaison du dossier (222) est active.

2. Siège (220) selon la revendication 1 dans lequel le module Li-Fi (100) comporte :
- Un dispositif (130) de détection de la position du dossier (222) du siège (220) configuré pour déterminer l'angle d'inclinaison du dossier (222) du siège,
- Une unité de commande configurée pour piloter les au moins deux sources lumineuses (110) en fonction de l'angle d'inclinaison du dossier (222) du siège (220).

3. Siège (220) selon la revendication 2 dans lequel l'unité de commande étant configurée pour que, selon l'angle d'inclinaison du dossier (222), seule la source lumineuse (110) associée à la sous-plage d'inclinaison du dossier (222) du siège (220) dans laquelle se trouve l'angle d'inclinaison du dossier (222) est activée.

4. Siège (220) selon la revendication 2 ou 3 dans lequel le dispositif (130) de détection de la position du dossier (222) du siège (220) est un inclinomètre ou un capteur de distance par temps de vol.

5. Siège (220) selon l'une des revendications précédentes dans lequel les moins deux sources lumineuses (110) sont soudées chacune respectivement sur un circuit imprimé rigide (140), lesdits circuits imprimés rigides étant reliés entre eux par un circuit imprimé flexible (150).

6. Siège (220) selon l'une des revendications précédentes dans lequel le module Li-Fi (100) comporte un boîtier pour la protection au moins des au moins deux sources lumineuses (110) et du au moins un photorécepteur (120).

7. Ensemble comportant un siège (220), conforme à l'une des revendications 1 à 6, et un dispositif Li-Fi (300), extérieur audit siège, le module Li-Fi (100) étant destiné à communiquer avec le dispositif Li-Fi (300) et étant positionné dans un cône d'émission dudit dispositif Li-Fi.

8. Cabine (200) d'avion comportant une pluralité de sièges (220) conformes à l'une des revendications 1 à 6 et une pluralité de dispositifs Li-Fi (300), chaque module Li-Fi (100) communicant avec un dispositif Li-Fi (300), chaque dispositif Li-Fi (300) comportant une source lumineuse et un photorécepteur (120).

## Patentansprüche

1. Sitz (220), der eine neigungsverstellbare Rückenlehne (222) mit einem Neigungswinkel innerhalb eines vordefinierten Neigungsbereichs aufweist, wobei der Sitz ein Datenkommunikationsmodul nach der Li-Fi-Technologie, das Li-Fi-Modul (100), aufweist, das an einem oberen Teil der Rückenlehne (222) positioniert ist, wobei das Li-Fi-Modul dazu bestimmt ist, mit einer zugehörigen Datenkommunikationsvorrichtung nach der Li-Fi-Technologie, der Li-Fi-Vorrichtung (300), zu kommunizieren, **dadurch gekennzeichnet, dass** das Li-Fi-Modul (100) Folgendes aufweist:
• mindestens zwei Lichtquellen (110), wobei jede Lichtquelle (110) so konfiguriert ist, dass sie einen Sendestrahl aussendet,
• mindestens einen Fotoempfänger (120),
wobei die mindestens zwei Lichtquellen (110) ausgerichtet und parallel zu einer mittleren Längsebene des Sitzes angeordnet sind,
wobei jede Lichtquelle (110) des Li-Fi-Moduls (100) so auf der Rückenlehne (222) des Sitzes (220) angeordnet ist, dass sie jeweils einem Unterbereich des Neigungsbereichs der Rückenlehne (222) des Sitzes zugeordnet ist,
das Li-Fi-Modul (100) so konfiguriert ist, dass je nach Neigungswinkel der Rückenlehne mindestens die Lichtquelle (110) aktiv ist, die dem Unterbereich zugeordnet ist, in dem sich der Neigungswinkel der Rückenlehne (222) befindet.

2. Sitz (220) nach Anspruch 1, wobei das Li-Fi-Modul (100) Folgendes aufweist:
• eine Vorrichtung (130) zum Erkennen der Position der Rückenlehne (222) des Sitzes (220), die so konfiguriert ist, dass sie den Neigungswinkel der Rückenlehne (222) des Sitzes bestimmt,
• eine Steuereinheit, die so konfiguriert ist, dass sie die mindestens zwei Lichtquellen (110) in Abhängigkeit von dem Neigungswinkel der Rückenlehne (222) des Sitzes (220) steuert.

3. Sitz (220) nach Anspruch 2, wobei die Steuereinheit so konfiguriert ist, dass nach dem Neigungswinkel der Rückenlehne (222) nur die Lichtquelle (110) aktiviert wird, die dem Neigungsunterbereich der Rückenlehne (222) des Sitzes (220) zugeordnet ist, in dem sich der Neigungswinkel der Rückenlehne (222) befindet.

4. Sitz (220) nach Anspruch 2 oder 3, wobei die Vorrichtung (130) zum Erkennen der Position der Rückenlehne (222) des Sitzes (220) ein Neigungsmesser oder ein Flugzeitabstandssensor ist.

5. Sitz (220) nach einem der vorhergehenden Ansprüche, wobei die mindestens zwei Lichtquellen (110) jeweils auf einer starren Leiterplatte (140) verlötet sind, wobei die starren Leiterplatten durch eine flexible Leiterplatte (150) miteinander verbunden sind.

6. Sitz (220) nach einem der vorhergehenden Ansprüche, wobei das Li-Fi-Modul (100) ein Gehäuse zum Schutz mindestens der mindestens zwei Lichtquellen (110) und des mindestens einen Fotoempfängers (120) aufweist.

7. Baugruppe, die einen Sitz (220) gemäß einem der Ansprüche 1 bis 6 und eine Li-Fi-Vorrichtung (300) außerhalb dieses Sitzes aufweist, wobei das Li-Fi-Modul (100) zur Kommunikation mit der Li-Fi-Vorrichtung (300) bestimmt ist und in einem Sendekegel der Li-Fi-Vorrichtung positioniert ist.

8. Flugzeugkabine (200), die eine Vielzahl von Sitzen (220) gemäß einem der Ansprüche 1 bis 6 und eine Vielzahl von Li-Fi-Vorrichtungen (300) aufweist, wobei jedes Li-Fi-Modul (100) mit einer Li-Fi-Vorrichtung (300) kommuniziert, wobei jede Li-Fi-Vorrichtung (300) eine Lichtquelle und einen Fotoempfänger (120) aufweist.

## Claims

1. Seat (220) comprising a backrest (222) adjustable in inclination, with an inclination angle lying within a predefined inclination range, said seat comprising a data communication module according to Li-Fi technology, referred to as a Li-Fi module (100), positioned at an upper part of the backrest (222), said Li-Fi module being intended to communicate with an associated data communication device using Li-Fi technology, referred to as a Li-Fi device (300), **characterised in that** the Li-Fi module (100) comprises:
• at least two light sources (110), each light source (110) being configured to emit an emission beam,
• at least one photoreceiver (120),
the at least two light sources (110) being aligned, arranged parallel to a median longitudinal plane of the seat,
each light source (110) of the Li-Fi module (100) being arranged on the backrest (222) of the seat (220) so as to be respectively associated with a subrange of the inclination range of the backrest (222) of said seat,
the Li-Fi module (100) is configured such that, depending on the angle of inclination of the backrest, at least the light source (110) associated with the subrange in which the angle of inclination of the backrest (222) lies is active.

2. Seat (220) according to claim 1, wherein the Li-Fi module (100) comprises:
• a device (130) for detecting the position of the backrest (222) of the seat (220) configured to determine the angle of inclination of the backrest (222) of the seat,
• a control unit configured to control the at least two light sources (110) according to the angle of inclination of the backrest (222) of the seat (220).

3. Seat (220) according to claim 2, wherein the control unit is configured so that, depending on the angle of inclination of the backrest (222), only the light source (110) associated with the subrange of inclination of the backrest (222) of the seat (220) in which the angle of inclination of the backrest (222) is located is activated.

4. Seat (220) according to claim 2 or 3, wherein the device (130) for detecting the position of the backrest (222) of the seat (220) is an inclinometer or a time-of-flight distance sensor.

5. Seat (220) according to one of the preceding claims wherein the at least two light sources (110) are each soldered respectively on a rigid printed circuit board (140), said rigid printed circuit boards being connected to each other by a flexible printed circuit board (150).

6. Seat (220) according to one of the preceding claims, wherein the Li-Fi module (100) comprises a housing for protecting the at least two light sources (110) and the at least one photoreceiver (120).

7. Assembly comprising a seat (220), according to one of claims 1 to 6, and a Li-Fi device (300), exterior to said seat, the Li-Fi module (100) being intended to communicate with the Li-Fi device (300) and being positioned in a transmission cone of said Li-Fi device.

8. Aircraft cabin (200) comprising a plurality of seats (220) according to any one of claims 1 to 6 and a plurality of Li-Fi devices (300), each Li-Fi module (100) communicating with a Li-Fi device (300), each Li-Fi device (300) comprising a light source and a photoreceiver (120).
